# EUROPÄISCHE PATENTSCHRIFT

(11) **EP 2 473 658 B1**
(45) Veröffentlichungstag und Bekanntmachung des Hinweises auf die Patenterteilung: **16.04.2014**
(21) Anmeldenummer: 10760208.8
(22) Anmeldetag: 27.07.2010
(51) Int. Cl.: D01F 2/00, C08K 7/02, C08J 5/04, D06M 101/06

(54) **CELLULOSEFASERN MIT VERBESSERTER DOSIERFÄHIGKEIT, VERFAHREN ZU IHRER HERSTELLUNG SOWIE IHRE VERWENDUNG ZUR VERSTÄRKUNG VON VERBUNDMATERIALIEN**
CELLULOSE FIBRES HAVING AN IMPROVED DOSING ABILITY, METHOD FOR THE PRODUCTION THEREOF AND USE THEREOF FOR REINFORCING COMPOSITE MATERIALS
FIBRES CELLULOSIQUES À CAPACITÉ DE DOSAGE AMÉLIORÉE, LEUR PROCÉDÉ DE FABRICATION AINSI QUE LEUR UTILISATION POUR RENFORCER DES MATÉRIAUX COMPOSITES

(30) Priorität: 03.09.2009 AT 13882009; 24.02.2010 AT 2862010
(43) Veröffentlichungstag der Anmeldung: 11.07.2012
(73) Patentinhaber: Lenzing AG, 4860 Lenzing (AT)
(72) Erfinder: GOBL, Markus, A-5164 Seeham (AT); INNERLOHINGER, Josef, A-4880 Berg im Attergau (AT); SUCHOMEL, Friedrich, A-4861 Schörfling (AT)
(74) Vertreter: Hanemann, Otto
(86) Internationale Anmeldenummer: PCT/AT2010/000274
(87) Internationale Veröffentlichungsnummer: WO 2011/026160

(56) Entgegenhaltungen:
- EP-A2- 1 674 146
- WO-A2-02/058841
- DE-A1- 10 337 009
- DE-A1- 19 517 763
- DE-A1-102007 028 531
- GB-A- 2 403 223
- JONG H LEE ET AL: "Assembly of synthetic cellulose I", BIOCHEMISTRY,, vol. 91, 2 August 1994 (1994-08-02), pages 7425-7429, XP001320215,
- SHIRO KOBAYASHI: 'Challenge of synthetic cellulose' JOURNAL OF POLYMER SCIENCE PART A: POLYMER CHEMISTRY Bd. 43, Nr. 4, 01 Januar 2005, Seiten 693 - 710, XP055054908 DOI: 10.1002/pola.20662 ISSN: 0887-624X

## Beschreibung

Die vorliegende Erfindung betrifft Cellulosefasern mit verbesserter Dosierfähigkeit, ein Verfahren zu ihrer Herstellung sowie ihre Verwendung zur Verstärkung von Verbundmaterialien, insbesondere von thermoplastischen Polymeren.

### Stand der Technik

Seit langem gibt es Bestrebungen, in Verbundmaterialen wie faserverstärkten Polymeren die weit verbreiteten Glasfasern durch leichte, nachhaltig herstellbare und in der Entsorgung einfache Fasern aus Cellulose zu ersetzen. Naheliegend schien es zunächst, hierfür Naturfasern einzusetzen, beispielsweise Baumwolle, Flachs, Hanf, oder auch andere. Diese weisen jedoch verschiedene, für Naturfasern typische Probleme auf: Gerüche bei der Verarbeitung und teilweise auch noch im fertigen Produkt, Fogging und Vergilbung. Außerdem ist der Faserdurchmesser je nach pflanzlichem Ursprung auf ca. 20 - 35 µm begrenzt. Oft liegen auch die Einzelfasern noch als Faserbüschel mit erheblich höherer Dicke vor. Alle diese Schwankungen bzw. Unregelmäßigkeiten erschweren einerseits die Verarbeitung und ergeben andererseits oft Qualitätsprobleme im fertigen Verbundprodukt.

Um diese Nachteile auszugleichen, wurden verschiedene Ansätze veröffentlicht, die Eignung der Naturfasern über einen Zwischenschritt zu verbessern. Beispielsweise wurden Abaca-Fasern zu einem Kardenband verarbeitet, das dann direkt einem Extruder zugeführt wird, in dem die Zerkleinerung der Fasern zusätzlich zur Vermischung mit dem Polymer stattfindet. Der Energieaufwand im Extruder ist bei diesem Verfahren allerdings sehr hoch.

Zellstoff, der durch chemische Prozesse aus Holz gewonnen wird, enthält die Cellulose zwar in sehr reiner Form. Seine Verwendung in Verbundwerkstoffen ist zwar bekannt, aber die mechanischen Eigenschaften der so hergestellten Produkte erfüllen höhere Ansprüche nicht ausreichend, wie später durch ein Vergleichsbeispiel (Beispiel 8) gezeigt werden wird.

Ein weiterer Ansatz ist die Verwendung von cellulosischen Kunstfasern. Allgemein sollen unter cellulosischen Kunstfasern für die Zwecke der vorliegenden Erfindung solche cellulosischen Fasern verstanden werden, die aus Lösungen erhalten wurden, in denen die Cellulose entweder rein physikalisch oder aufgrund chemischer Derivatisierung gelöst vorlag. Bekannteste Vertreter dieser Fasergattung sind Viskose - auch und insbesondere hochfester Viskose-Reifencord -, Modal, Lyocell und Cupro, deren Bezeichnungen durch die Terminologie der BISFA definiert sind. Diese Fasern haben eine hohe chemische Reinheit, eine hohe Gleichmäßigkeit und Festigkeit und lassen sich gezielt mit den jeweils erforderlichen Faserdurchmessern herstellen, die je nach Anwendungszweck eine optimale Verstärkungswirkung geben würden. Problematisch ist jedoch ihre Verarbeitbarkeit, insbesondere die Dosierfähigkeit und die gleichmäßige Verteilung im Kunststoff, in den für Verbundwerkstoffe typischen Verfahren wie z. B. Extrusionsverfahren. Die Standard-Fasertypen mit Schnittlängen für Textil, d. h. etwa 38 mm, aber auch Kurzschnittfasern, d. h. mit Schnittlängen um 5 mm können im Bereich Kunststoffverstärkung nicht eingesetzt werden, da sie mit Standard-Kunststoffverarbeitungsmaschinen nicht zu gleichmäßigen Produkten verarbeitet werden können. Eines der Hauptprobleme ist dabei die Verstopfung der Dosiereinrichtungen der Extruder durch Faserverhakungen und Brückenbildung.

Ansätze zur Lösung dieses Problems beispielsweise durch Herstellen von Faser-Kunststoff-Pellets aus Endlos-Filamentgarnen oder auch Kardenbändern mittels sogenannter Pull-Drill-Verfahren bzw. Pultrusionsverfahren führten bisher nicht zum gewünschten Ergebnis. Außerdem sind diese Mischkörper durch das bereits enthaltene Polymer nicht mehr universell einsetzbar, sondern meist auf die Verwendung in dem gleichen Polymer festgelegt. Daher ließen sich die positiven Eigenschaften beispielsweise der Lyocell-Fasern, wie z. B. die hohe Reißfestigkeit bisher im Bereich Kunststoffverstärkung nicht nutzen.

### Aufgabe

Angesichts dieser Probleme bestand die Aufgabe, cellulosische Fasermaterialien zur Verfügung zu stellen, die in den üblichen Kunststoffverarbeitungsmaschinen problemlos zu verarbeiten sind, eine hohe Qualität der Verbundwerkstoffe ergeben und einfach und kostengünstig herzustellen sind.

### Beschreibung der Erfindung

Diese Aufgabe konnte gelöst werden durch cellulosische Kunstfasern, die einen mittleren Durchmesser zwischen 5 und 20 µm und eine anzahlgewichtete mittlere Länge zwischen 200 und 800 µm aufweisen. Besonders vorteilhaft waren dabei Fasern mit einem Verhältnis von mittlerer Länge zu anzahlgewichtetem mittlerem Durchmesser (UD) von 30 bis 40. Längere Fasern wären nicht mehr dosierfähig. Kürzere Fasern wären zwar - abgesehen von einer möglichen stärkeren Staubbildung - ebenfalls gut dosierfähig, aber würden in Verbundwerkstoffen keine ausreichende Verstärkungswirkung mehr ergeben. Zudem wären sie auch zu teuer in der Herstellung, da sie nur mit einem geringen Durchsatz in der Mühle hergestellt werden könnten. Zum Vergleich: Zellstofffasern sind mit etwa 20 bis 35 µm erheblich dicker und zeigen daher nur geringe Verstärkungseffekte. Auch cellulosische Kunstfasern können natürlich mit größeren Durchmessern hergestellt werden. So weisen beispielsweise cellulosische Kunstfasern mit einem Einzelfasertiter von 15 dtex einen mittleren Durchmesser von 35 µm auf. Diese dickeren Fasern haben die bereits genannten allgemeinen Vorteile von Kunstfasern, nämlich hohe Reinheit und Gleichmäßigkeit und sind aufgrund der höheren Steifigkeit auch bei einer größeren Länge noch gut dosierbar, zeigen aber aus dem gleichen Grund auch nur einen geringen Verstärkungseffekt in Kunststoffen. Bereits ebenfalls kommerziell erhältliche Kurzschnittfasern aus Viskose oder Lyocell sind mit etwa 5000 µm wesentlich länger.

Der mittlere Durchmesser der erfindungsgemäßen Fasern entspricht normalerweise dem der Ausgangsfasern, da er bei der Herstellung, wie unten beschrieben, nicht wesentlich verändert wird.

Die erfindungsgemäßen Fasern sind zur Verwendung in faserverstärkten Kunststoffen hervorragend geeignet. Aufgrund ihrer hohen mechanischen Festigkeiten sind Modal- und Lyocell-Fasern, also Fasern mit einer Reißfestigkeit (konditioniert) von mindestens 35 cN/tex, bevorzugt. Als Fasern mit hoher mechanischer Festigkeit kommen ebenso auch die für Reifencord hergestellten Endlosfasern in Betracht. Alle diese Fasern weisen auch einen Modul von mindestens 10 GPa auf (bestimmt nach Lenzing Standard TIPQA 03/06 an trockenen Einzelfasern mittels eines Vibrodyn-Meßgerätes mit 50 mg Vorbelastung). Fasern mit einer Reißfestigkeit (konditioniert) von mindestens 35 cN/tex und einem Modul von mindestens 10 GPa sollen für die Zwecke der vorliegenden Erfindung als "hochfest" bezeichnet werden. Besonders bevorzugt sind Lyocell-Fasern. Standard-Viskosefasern sind zwar grundsätzlich ebenfalls zur Verstärkung von Kunststoffen geeignet, aber aufgrund ihrer wesentlich geringeren Festigkeit von ca. 21 cN/tex ist eine wesentlich geringere Verstärkungswirkung zu erwarten.

Als Matrix-Polymer eines solchen Verbundwerkstoffes sind grundsätzlich alle Arten thermoplastischer Polymere geeignet, also sowohl erdölbasierte als auch auf Basis nachwachsender Rohstoffe hergestellte. Weit verbreitet sind vor allem die verschiedenen Polyolefine wie Homo- oder Copolymere des Polyethylens und Polypropylens sowie deren Mischungen. Ebenso verwendbar sind die weiteren erdölbasierten Polymere wie Polyester, Polyamide, Polystyrole, sowie thermoplastische Elastomere (TPE) und sonstige schlagzäh modifizierte Polymere. Besonders interessant sind in der heutigen Zeit die auf Basis nachwachsender Rohstoffe hergestellten und/oder bioabbaubaren Polymere wie beispielsweise Polymilchsäure (PLA), Blends aus Co-Polyester und PLA, Polyhydroxyalcanoate (PHA) (ein Beispiel aus dieser Gruppe ist Polyhydroxybutyrat (PHB)), Stärke- und stärkebasierte Polymere, Polyvinylalcohol-co-vinylacetat-Copolymere, Polyvinylalkohole (PVA, z. B. Mowiol®), Polyvinylbutyrale (PVB, z. B. Mowital®) sowie unter Verwendung nachwachsender Rohstoffe hergestellte Polytrimethylenterephthalate (z. B. Sorona®). Ebenso geeignet sind auch die verschiedenen, unter der Marke BioMax® vermarkteten Polymere, die thermoplastische Stärke (TPS) bzw. unter Verwendung nachwachsender Rohstoffe hergestellte Polytrimethylenterephthalate enthalten, Mater-Bi®, ein biologisch abbaubarer Blend aus Stärke und Polyester, bei dem der Polyester zum größten Teil auf nachwachsenden Rohstoffen basiert, und NAWAPUR®, ein Schaumstoff,der ein Polyol auf Basis nachwachsender Rohstoffe enthält.

Gegenstand der vorliegenden Erfindung ist daher auch die Verwendung solcher cellulosischer Kunstfasern, die einen mittleren Durchmesser zwischen 5 und 20 µm und eine anzahlgewichtete mittlere Länge zwischen 200 und 800 µm aufweisen, zur Herstellung von Verbundwerkstoffen aus thermoplastischen Polymeren, wobei die Fasern in ein Mischaggregat eindosiert und dort in dem thermoplastischen Polymer gleichmäßig verteilt werden.

Gegenstand der vorliegenden Erfindung sind nicht zuletzt auch Verbundwerkstoffe aus thermoplastischen Polymeren, die die oben beschriebenen cellulosischen Kunstfasern, die einen mittleren Durchmesser zwischen 5 und 20 µm und eine anzahlgewichtete mittlere Länge zwischen 200 und 800 µm aufweisen, enthalten. Überraschenderweise sind die cellulosischen Kunstfasern in dem thermoplastischen Polymer gleichmäßige verteilt.

Die erfindungsgemäßen Fasern sind kurz genug, um mit Standard-Equipment dosierfähig zu sein. Sie sind zumindest mäßig rieselfähig. Die Dosierbarkeit ist für so dünne Fasern aufgrund der Flexibilität und daraus folgenden Faserverhakungen ansonsten nur gering. Dickere (Natur)Fasern sind eher rieselfähig, da sie steifer sind.

Der geringere Faserdurchmesser bringt aber deutliche Vorteile in der Kunststoffverstärkung, wie auch die Beispiele zeigen. Auch die Tatsache, dass noch ein merklicher Anteil von Fasern mit Länge über 1mm im Pulver enthalten ist, wirkt sich auf die Verstärkung positiv aus. Die Beispiele zeigen, dass die mechanischen Werte von Compounds aus erfindungsgemäßen Lyocell-Fasern in einer Polypropylen-Matrix fast identisch sind mit denen von Werkstücken, für die 8 mm lange, kommerziell erhältliche Kurzschnitt-Fasern verwendet wurden. Zusammenfassend lässt sich sagen, dass mit den erfindungsgemäßen Fasern ein optimaler Kompromiss zwischen Verstärkungswirkung und Dosierfähigkeit gegeben ist.

Ein weiterer Vorteil bei der Verwendung von erfindungsgemäßen Fasern gegenüber Naturfasern ist die gleichbleibende hohe Qualität, was dadurch sichergestellt wird, dass cellulosische Kunstfasern über einen industriellen Prozess hergestellt werden und Wetter- und Klimaschwankungen anders als bei Naturfasern keinen Einfluss auf Dimension und Eigenschaften der Fasern haben. Da die erfindungsgemäßen Fasern aus hochreiner Cellulose bestehen, besteht auch das von Naturfasern her bekannte Geruchsproblem bei der Verarbeitung (und auch teilweise später im Werkstück) bei der erfindungsgemäßen Verwendung in Compounds nicht. Phänomene wie Fogging oder Vergilbung sind ebenfalls vernachlässigbar.

Die erfindungsgemäßen Fasern können aus reiner Cellulose bestehen, wenn sie durch Mahlung von Standard-Fasern hergestellt wurden. Daneben sind aber auch modifizierte Fasern möglich, wenn sie durch Mahlung von entsprechend modifizierten Ausgangsfasern hergestellt wurden. Diese modifizierten Fasern können beispielsweise chemisch derivatisiert sein oder eingesponnene, d. h. inkorporierte Additive enthalten. Ebenso kann von Ausgangsfasern mit nicht-runden Querschnitten ausgegangen werden. Geeignete Fasertypen sind beispielsweise solche mit trilobalen Querschnitten, wie sie unter anderem in der WO 2006/060835 beschrieben sind oder Bändchenfasern mit rechteckigem Querschnitt. Alle diese Varianten sind nur durch den vorhergegangenen Verformungsprozess aus der Spinnlösung möglich. Insbesondere das Inkorporieren von Additiven ist in dieser Form mit Naturfasern oder Zellstoff nicht realisierbar; dort ist nur eine oberflächliche Aufbringung möglich. Daher ist durch die vorliegende Erfindung die Bereitstellung von Fasern möglich, die sich beispielsweise noch besser in die Kunststoffmatrix einbinden bzw. andere Funktionalitäten mitbringen. Eine rein oberflächliche Aufbringung von Additiven ist selbstverständlich auch bei erfindungsgemäßen Fasern möglich.

Der Verbundwerkstoff kann neben den cellulosischen Kunstfasern auch weitere Fasermaterialien, insbesondere Zellstoff und/oder Naturfasern enthalten. Die Auswahl einer solchen Mischung hängt grundsätzlich von dem geplanten Anwendungszweck des Verbundmaterials und den sich daraus ergebenden Materialanforderungen ab. Insbesondere können weitere solche Fasermaterialen aus Kostengründen zugemischt werden. So ist beispielsweise auch die Zumischung von Glasfasern möglich. Die positive, verstärkende Wirkung der erfindungsgemäßen gemahlenen cellulosischen Kunstfasern bleibt auch im Falle solcher Zumischungen erhalten.

Ein weiterer Gegenstand der vorliegenden Erfindung ist ein Verfahren zur Herstellung der erfindungsgemäßen Kunstfasern, das die folgenden Schritte umfaßt:
a. Bereitstellen handelsüblicher textiler cellulosischer Kunstfasern mit einem mittleren Durchmesser zwischen 5 und 20 µm und einer Länge zwischen 5 und 200 mm, bevorzugt zwischen 20 und 60 mm,
b. Zerkleinern der Kunstfasern mittels einer Präzisionsschneidmühle.

Kürzere Ausgangsfasern sind nicht wirtschaftlich einsetzbar, da bei deren Herstellung aufgrund des hohen Schneidaufwands nur eine zu geringe Produktivität erreicht werden kann. Es muß dabei bedacht werden, dass die vorliegende Erfindung nur wirtschaftlich sinnvoll ist, wenn als Ausgangsmaterial textile Standard-Fasern eingesetzt werden können. Die Faserlänge wird letztendlich durch die Maschenweite des in der Präzisionsschneidmühle eingesetzten Siebs bestimmt. Die resultierende anzahlgewichtete mittlere Länge der erfindungsgemäßen Kunstfasern entspricht normalerweise ungefähr der Maschenweite des eingesetzten Siebs.

Als Präzisionsschneidmühle kommen verschiedene Modelle in Betracht. Ein gut geeignetes Aggregat ist beispielsweise die Schneidmühle PSC 5-10 der Fa. Pallmann. Ein wichtiges Kriterium zur Auswahl einer geeigneten Schneidmühle ist, dass die Fasern ausschließlich in der Länge eingekürzt werden und der Faserdurchmesser konstant bleibt. Fibrillation der Fasern darf beim Mahlen nicht auftreten, da sie zu Staubbildung und starker Verschlechterung der Dosierbarkeit führt. Als Ausgangsmaterial können vorzugsweise textile Standard-Fasern (bspw. 1,3dtex / 38mm) verwendet werden. Daß die Wahl des geeigneten Vermahlungsaggregates trotzdem kein triviales Problem ist, zeigt beispielsweise die Tatsache, dass andere Mahlversuche wie z. B. bei Hosokawa Alpine nicht erfolgreich waren. Wichtig ist für die Auswahl geeigneter Aggregate vor allem, Verklumpungen und hohe Wärmebelastungen des Mahlgutes zu vermeiden. Zur Vermeidung von Verklumpungen und hohen Wärmebelastungen des Mahlgutes ist auch die Verwendung einer dementsprechend optimierten Avivage wichtig.

Die Bereitstellung der Ausgangsfasern kann in einer bevorzugten Ausführungsform bereits beim Faserhersteller erfolgen, wo die Ausgangsfasern direkt nach ihrer Herstellung und Nachbehandlung, beispielsweise nach dem Trocknen, in die erfindungsgemäße Schneidmühle gegeben werden können. Dabei ist dann der Zwischenschritt der Ballenpressung und -öffnung nicht notwendig.

Eine zweite bevorzugte Ausführungsform des erfindungsgemäßen Verfahrens besteht darin, dass - meist bei einem räumlich vom Faserhersteller getrennten Betrieb - die Bereitstellung in Schritt a) in Ballenform erfolgt. In diesem Fall sollten die Fasern vor der Zerkleinerung mit einem Ballenöffner geöffnet werden. Dazu können die aus der Textilindustrie bekannten Maschinentypen eingesetzt werden. Eine praktische Schwierigkeit wird teilweise darin bestehen, dass die Unternehmen, die das erfindungsgemäße Verfahren ausführen, üblicherweise keine Textilunternehmen, sondern solche aus der Kunststoffverarbeitenden Industrie sind und sie daher nicht selbstverständlich über einen Ballenöffner verfügen. Je nach Konsistenz der Fasern und des Ballens kann jedoch unter Umständen auch ein Shredder oder ein ähnliches Aggregat zum Öffnen der verpressten Fasern geeignet sein.

### Beispiele:

Die Erfindung soll nun anhand von Beispielen erläutert werden. Diese sind als mögliche Ausführungsformen der Erfindung zu verstehen. Keineswegs ist die Erfindung auf den Umfang dieser Beispiele eingeschränkt.

Die Faserlängen und die Faserlängenverteilungen wurden mit einem MorFI Fiber Analyzer der Firma Techpap, Frankreich ermittelt.
Die mittleren Faserdurchmesser der Ausgangsfasern wurden über ein Vibrodyn-Faseranalysator zur Titerbestimmung und Umrechnung des Titers in den Durchmesser mittels der Dichte bestimmt. Beim Mahlen der Ausgangsfasern nach dem erfindungsgemäßen Verfahren verändert sich der Faserdurchmesser nicht, wie durch Nachprüfung unter dem Lichtmikroskop festgestellt werden konnte.

### Beispiel 1:

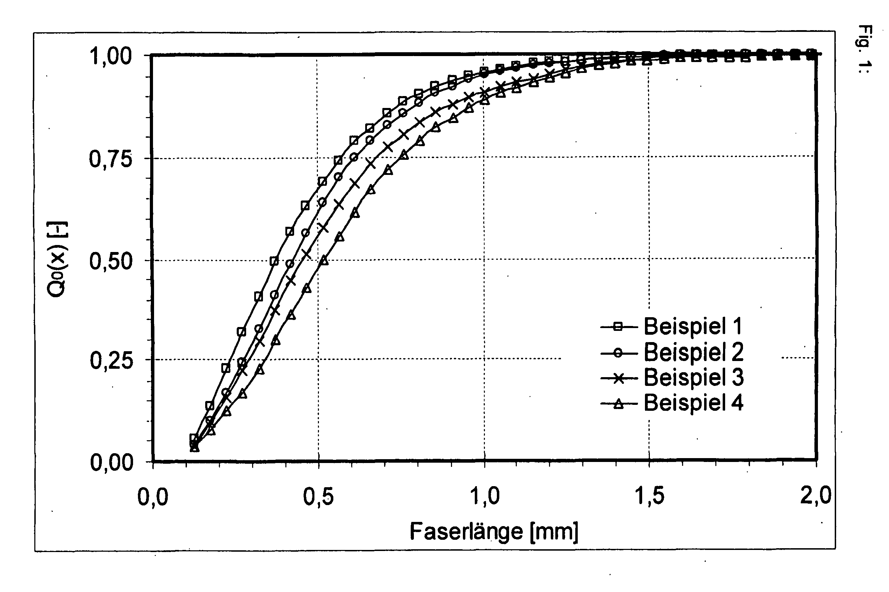

Standard-Textilfasern aus Lyocell (TENCEL® der Fa. Lenzing AG) mit einem Einzelfasertiter von 0,9 dtex und einer Schnittlänge von 38 mm wurde in einer Schneidmühle PSC 5-10 der Fa. Pallmann, ausgestattet mit einem Sieb mit 0,35 mm Maschenweite, gemahlen. Das erhaltene Pulver bestand aus Fasern mit einem mittleren Durchmesser von 9 µm und einer anzahlgewichteten mittleren Faserlänge von 300 µm. Die längengewichtete Faserlängenverteilung ist in Fig. 1 dargestellt.

### Beispiel 2:

Standard-Textilfasern aus Lyocell (TENCEL® der Fa. Lenzing AG) mit einem Einzelfasertiter von 1,3 dtex und einer Schnittlänge von 38 mm wurde in einer Schneidmühle PSC 5-10 der Fa. Pallmann, ausgestattet mit einem Sieb mit 0,35 mm Maschenweite, gemahlen. Das erhaltene Pulver bestand aus Fasern mit einem mittleren Durchmesser von 10 µm und einer anzahlgewichteten mittleren Faserlänge von 350 µm. Die längengewichtete Faserlängenverteilung ist in Fig. 1 dargestellt.

### Beispiel 3:

Beispiel 2 wurde wiederholt, jedoch mit einem Sieb mit 0,50 mm Maschenweite. Das erhaltene Pulver bestand aus Fasern mit einem mittleren Durchmesser von 10 µm und einer anzahlgewichteten mittleren Faserlänge von 400 µm. Die längengewichtete Faserlängenverteilung ist in Fig. 1 dargestellt.

### Beispiel 4 (Vergleichsbeispiel):

Lose Lyocell-Fasern (TENCEL® der Fa. Lenzing AG) mit einem Einzelfasertiter von 15 dtex und einer Schnittlänge von 15 mm (Sondertype) wurden in einer Schneidmühle PSC 5-10 der Fa. Pallmann, ausgestattet mit einem Sieb mit 1,8 mm Maschenweite, gemahlen. Das erhaltene Pulver bestand aus Fasern mit einem mittleren Durchmesser von 35 µm und einer anzahlgewichteten mittleren Faserlänge von 500 µm. Die längengewichtete Faserlängenverteilung ist in Fig. 1 dargestellt.

### Beispiel 5:

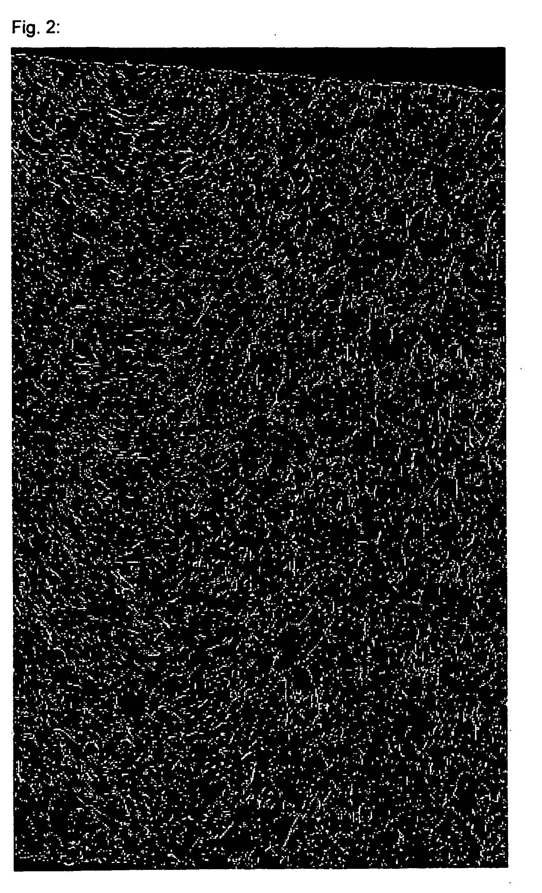

20 Gew.-% des aus Beispiel 3 erhaltenen Regeneneratcellulosepulvers wurden in einem Extruder Thermoprisn 24HC in 77 Gew.-% eines handelsüblichen Polypropylen-Harzes (Typ Borcom™ BG055AI von Fa. Borealis) unter Verwendung von 3 Gew.-% eines handelsüblichen Haftvermittlers auf Basis von Maleinsäureanhydrid (Typ Exxelor™ PO1020 von Fa ExxonMobil Corporation) eingemischt und granuliert. Aus dem so erhaltenen Compound wurden mit einer Spritzgussmaschine vom Typ Engel Victory 80, nach ISO 3167 Normprüfkörper hergestellt. Die gemessenen Materialeigenschaften sind in Tabelle 1 aufgeführt. Fig. 2 zeigt auf einem Röntgenbild des erhaltenen Verbundkörpers die gleichmäßige Verteilung des Pulvers in der Matrix.

### Beispiel 6 (Vergleichsbeispiel):

Beispiel 5 wurde wiederholt, wobei jedoch anstelle des Regeneratcellulosepulvers silikonisierte Lyocell-Kurzschnittfasern (TENCEL® der Fa. Lenzing AG) mit einem mittleren Einzelfaser-Durchmesser von 10 µm und einer Länge von 8 mm eingemischt wurden. Um dieses Material in den Extruder dosieren zu können, wurde es zuvor in einer Flachmatrizenpresse (Hersteller Fa. Amandus Kahl, Hamburg) pelletiert. Die Silikonisierung ist notwendig, damit die Pellets im Extruder bzw. in der Spritzgußmaschine wieder zerfallen und die verpressten Einzelfasern sich gleichmäßig im Matrixpolymer verteilen. Die gemessenen Materialeigenschaften sind in Tabelle 1 aufgeführt. Diese Eigenschaften sind gut, aber die Silikonisierung und Pelletierung bedeutet einen erheblichen zusätzlichen Aufwand, der sich bei vielen Anwendungen nicht rechtfertigen lässt.

### Beispiel 7 (Vergleichsbeispiel):

Beispiel 5 wurde wiederholt, wobei aber ein handelsübliches fertiges Polypropylen-Compound mit Haftvermittler und 20 Gew.-% Glasfasern (Einzelfaser-Durchmesser von 14 µm, Länge von 4,5 mm) der Firma Borealis direkt nach ISO 3167 zu Normprüfkörpern verarbeitet wurde. Die gemessenen Materialeigenschaften sind in Tabelle 1 aufgeführt.

### Beispiel 8 (Vergleichsbeispiel):

Beispiel 5 wurde unter Verwendung von Naturfasern aus Sisal mit einem Einzelfaserdurchmesser von > 20 µm wiederholt. Die Einzelfaserlängen waren entsprechend der Herkunft stark uneinheitlich. Um dieses Material überhaupt in den Extruder dosieren zu können, wurde es zuvor in einer Flachmatrizenpresse (Hersteller Fa. Amandus Kahl, Hamburg) pelletiert. Die gemessenen Materialeigenschaften sind in Tabelle 1 aufgeführt.

### Beispiel 9 (Vergleichsbeispiel):

Beispiel 5 wurde wiederholt, wobei jedoch anstelle des Regeneratcellulosepulvers handelsübliches.Cellulose I-Pulver des Typs PWC500 von J. Rettenmaier & Söhne GmbH+Co.KG aus gemahlenem Zellstoff für die Verstärkung von Kunststoffen mit einem mittleren Einzelfaser-Durchmesser von 35 µm und einer mittleren Länge von 500 µm eingemischt wurde. Das Pulver war gut dosierbar. Die gemessenen Materialeigenschaften sind in Tabelle 1 aufgeführt.

### Beispiel 10:

Beispiel 5 wurde wiederholt, wobei jedoch der Anteil des Lyocell-Pulvers auf 33 Gew.-% erhöht wurde, sodass das aus dieser Mischung entstandene Verbundmaterial dasselbe spezifische Gewicht aufwies, wie das Material aus Beispiel 7. Die Ergebnisse der durchgeführten Messungen, die die Leistungsfähigkeit der Verbundmaterialien testen sollen, können so dichteneutral verglichen werden (Ergebnisse siehe Tabelle 1). Zugfestigkeit und Schlagzähigkeit (ungekerbt) waren wesentlich höher als bei dem glasfaserverstärkten Kunststoff in Beispiel 7, bei gleich guten sonstigen mechanischen Eigenschaften.

### Beispiel 11 (Vergleichsbeispiel):

20 Gew.-% des aus Beispiel 4 erhaltenen Regeneneratcellulosepulver wurden in einem Extruder Thermoprisn 24HC in 77 Gew.-% eines handelsüblichen Polypropylen-Harzes (Typ BorcomTM BG055AI von Fa. Borealis) unter Verwendung von 3 Gew.-% eines handelsüblichen Haftvermittlers auf Basis von Maleinsäureanhydrid (Typ ExxelorTM PO1020 der Fa. ExxonMobil Corporation) eingemischt und daraus mit einer Spritzgussmaschine vom Typ Engel Victory 80 nach ISO 3167 Normprüfkörper hergestellt. Die gemessenen Materialeigenschaften sind in Tabelle 1 aufgeführt. Sie liegen auf einem niedrigen Niveau, vergleichbar etwa mit den mit gleich dicken Zellstofffasern (Beispiel 9) oder ähnlich dicken Sisal-Naturfasern (Beispiel 8) erhaltenen Verbundformkörpern.

**Tabelle 1: Mechanische Eigenschaften von faserverstärkten Verbundwerkstoffen**

| **Beispiel** | **Faseranteil und - material** | **E-Modul [Mpa]** | **Zugfestigkeit [Mpa]** | **Dehnung [%]** | **Schlagzähig keit ungekerbt [kJ/m²]** | **Kerbschlagzähigkeit [kJ/m²]** | **Wärmeformbeständige it HDT-B [°C]** |
|---|---|---|---|---|---|---|---|
| 5 | 20% TENCEL-Pulver | 2962 | 52,01 | 6,98 | 43,15 | 4,47 | 143,3 |
| 6 | 20 % TENCEL-Kurzschnitt | 3253 | 57,9 | 5,6 | 45,84 | 4,91 | 159,0 |
| 7 | 20 % Glasfaser | 4801 | 66,68 | 3,02 | 39,78 | 7,32 | 159,1 |
| 8 | 20 % Sisal ø>20µm | 2771 | 35,1 | 3,53 | 17,49 | 3,87 | 133,4 |
| 9 | 20 % Cellulose-I-Pulver | 2975 | 42,93 | 6,34 | 28,89 | 2,51 | 142,6 |
| 10 | 33% TENCEL-Pulver | 4266 | 72,4 | 4,73 | 54,79 | 7,6 | 161,9 |
| 11 | 20% TENCEL-Pulver (Durchmesser 35µm) | 2677 | 39,49 | 4,45 | 24,04 | 2,4 | 146 |

## Patentansprüche

1. Cellulosische Kunstfasern, die aus Lösungen erhalten wurden, In denen die Cellulose entweder rein physikalisch oder aufgrund chemischer Derivatisierung gelöst vorlag, zur Verwendung in faserverstärkten Kunststoffen, **dadurch gekennzeichnet, dass** sie einen mittleren Durchmesser zwischen 5 und 20 µm (gemäß Beschreibung) und eine anzahigewichtete mittlere Länge zwischen 200 und 800 µm (gemäß Beschreibung) aufweisen.

2. Cellulosische Kunstfasern gemäß Anspruch 1, **dadurch gekennzeichnet, dass** sie hochfeste cellulosische Kunstfasern sind.

3. Cellulosische Kunstfasern gemäß Anspruch 1 oder 2, **dadurch gekennzeichnet, dass** sie zur Fasergattung Lyocell gehören.

4. Verwendung cellulosischer Kunstfasern zur Herstellung von Verbundwerkstoffen aus thermoplastischen Polymeren, wobei die Fasern in ein Mischaggregat eindosiert und dort in dem thermoplastischen Polymer gleichmäßig verteilt werden, **dadurch gekennzeichnet, dass** cellulosische Kunstfasern mit einem mittleren Durchmesser zwischen 5 und 20 µm und einer anzahlgewichteten mittleren Länge zwischen 200 und 800 µm eingesetzt werden.

5. Verwendung gemäß Anspruch 4, wobei in den Verbundwerkstoff neben den cellulosischen Kunstfasern auch weitere Fasermaterialien, insbesondere Zellstoff und/oder Naturfasern eingemischt werden.

6. Verwendung gemäß Anspruch 4, wobei die thermoplastischen Polymere erdölbasierte Thermoplaste sind, insbesondere Polyolefine wie Homo- oder Copolymere des Polyethylens und Polypropylens sowie deren Mischungen, Polyester, Polyamide, Polystyrole, sowie thermoplastische Elastomere (TPE) und sonstige schlagzäh modifizierte Polymere.

7. Verwendung gemäß Anspruch 4, wobei die thermoplastischen Polymere ganz oder teilweise auf nachwachsenden Rohstoffen basierende Thermoplaste sind, insbesondere Polymilchsäure (PLA), Blends aus Co-Polyester und PLA, Polyhydroxyalcanoate (PHA), beispielsweise Polyhydroxybutyrat (PHB), Stärke- und stärkebasierte Polymere, Polyvinylalcohol-co-vinylacetat-Copolymere, Polyvinylalkohole, Polyvinylbutyrale, unter Verwendung nachwachsender Rohstoffe hergestellte Polytrimethylenterephthalate oder Polyole, sowie biologisch abbaubare Blends aus Stärke und Polyester.

8. Verfahren zur Herstellung von Kunstfasern gemäß Anspruch 1, **gekennzeichnet durch** die folgenden Schritte:
a. Bereitstellen handelsüblicher textiler cellulosischer Kunstfasern mit einem mittleren Durchmesser zwischen 5 und 20 µm und eine Länge zwischen 5 und 200 mm, bevorzugt zwischen 20 und 60 µm,
b. Zerkleinern der Kunstfasern mittels einer Präzisionsschneidmühle.

9. Verfahren gemäß Anspruch 8, wobei die Bereitstellung in Schritt a) in Ballenform erfolgt und die Fasern vor der Zerkleinerung mit einem Ballenöffner geöffnet werden.

## Claims

1. Cellulosic man-made fibers, obtained from solutions wherein the cellulose was present as dissolved either purely physically or due to chemical derivatization, for use in fiber-reinforced plastics, **characterized in that** they have an average diameter between 5 and 20 µm (according to the description) and a number-weighted average length between 200 and 800 µm (according to the description).

2. The cellulosic man-made fibers as claimed in claim 1, **characterized in that** they are high-strength cellulosic man-made fibers.

3. The cellulosic man-made fibers as claimed in claim 1 or 2, **characterized in that** they belong to the lyocell fiber genre.

4. Use of cellulosic man-made fibers for the production of composite materials from thermoplastic polymers, the fibers being dosed into a mixing unit where they are distributed evenly in the thermoplastic polymer, **characterized in that** cellulosic man-made fibers having an average diameter between 5 and 20 µm and a number-weighted average length between 200 and 800 µm are used.

5. The use as claimed in claim 4, wherein apart from the cellulosic man-made fibers also other fiber materials, especially pulp and/or natural fibers, are mixed into the composite material.

6. The use as claimed in claim 4, wherein the thermoplastic polymers are petroleum-based thermoplastics, especially polyolefins such as homopolymers or copolymers of polyethylene and polypropylene as well as their mixtures, polyesters, polyamides, polystyrenes, as well as thermoplastic elastomers (TPE) and other impact-resistant modified polymers.

7. The use as claimed in claim 4, wherein the thermoplastic polymers are thermoplastics completely or partially based on renewable raw materials, especially polylactic acid (PLA), blends of copolyester and PLA, polyhydroxyalkanoates (PHA) such as polyhydroxybutyrate (PHB), starch and starch-based polymers, polyvinyl alcohol co-vinyl acetate copolymers, polyvinyl alcohols, polyvinyl butyrals, polytrimethylene terephthalates or polyoles made using renewable raw materials, as well as biodegradable blends of starch and polyester.

8. A method for the production of man-made fibers as claimed in claim 1, **characterized by** the following steps:
a. providing commercially available textile cellulosic man-made fibers having an average diameter between 5 and 20 µm and a length between 5 and 200 mm, preferably between 20 and 60 mm,
b. comminuting the man-made fibers by means of a precision cutting mill.

9. The method as claimed in claim 8, wherein the provision in step a) takes place in the form of bales and the fibers are opened with a bale opener prior to the comminution.

## Revendications

1. Fibres cellulosiques artificielles obtenues de solutions dans lesquelles la cellulose était présente sous forme dissoute, soit purement physique, soit en raison d'une dérivatisation chimique, destinées à être utilisées dans des composites à fibres de polymères, **caractérisées en ce qu'**elles présentent un diamètre compris entre 5 et 20 µm (conformément à la description) et une longueur moyenne pondérée en nombre comprise entre 200 et 800 µm (conformément à la description).

2. Fibres cellulosiques artificielles selon la revendication 1, **caractérisées en ce qu'**elles sont des fibres cellulosiques artificielles à haute résistance.

3. Fibres cellulosiques artificielles selon la revendication 1 ou 2, **caractérisées en ce qu'**elles appartiennent à la famille des fibres lyocell.

4. Utilisation de fibres cellulosiques artificielles dans la fabrication de matériaux composites en polymères thermoplastiques, dont les fibres sont dosées dans un dispositif de mélange où elles sont réparties uniformément dans le polymère thermoplastique, **caractérisée en ce que** les fibres cellulosiques artificielles utilisées ont une diamètre moyen compris entre 5 et 20 µm et une longueur moyenne pondérée en nombre comprise entre 200 et 800 µm.

5. Utilisation selon la revendication 4, des fibres autres que les fibres cellulosiques artificielles étant ajoutées au matériau composite, notamment de la cellulose et/ou des fibres naturelles.

6. Utilisation selon la revendication 4, les polymères thermoplastiques étant des thermoplasts à base de pétrole, notamment des polyoléfines comme les homopolymères ou copolymères de polyéthylène et de polypropylène, ainsi que leurs mélanges, du polyester, des polyamides, des polystyrènes, ainsi que des élastomères thermoplastiques (ETP) et autres polymères modifiés chocs.

7. Utilisation selon la revendication 4, les polymères thermoplastiques étant des thermoplasts entièrement ou partiellement à base de matières premières renouvelables, notamment de l'acide polylactique (APL), des mélanges de copolyester et d'APL, des polyhydroxyalcanoates (PHA), par exemple du polyhydroxybutyrate (PHB), de l'amidon et des polymères à base d'amidon, des copolymères d'alcool polyvinylique et d'acétate de vinyl, des alcools polyvinyliques, des polyvinylbutyrals, des polytriméthylènes téréphtalates ou polyols fabriqués en utilisant des matières premières renouvelables, ainsi que des mélanges biodégradables d'amidon et de polyester.

8. Procédé de fabrication de fibres artificielles selon la revendication 1, **caractérisé par** les étapes suivantes :
a. mise à disposition de fibres cellulosiques artificielles textiles disponibles dans le commerce, ayant un diamètre moyen compris entre 5 et 20 µm et une longueur comprise entre 5 et 200 mm, de préférence entre 20 et 60 mm,
b. broyage des fibres artificielles au moyen d'un granulateur de précision.

9. Procédé selon la revendication 8, la mise à disposition de l'étape a) se faisant sous la forme de balles, et les fibres étant ouvertes avant le broyage au moyen d'un brise-balles.
